# EUROPÄISCHE PATENTANMELDUNG

(11) **EP 3 901 068 A1**
(43) Veröffentlichungstag der Anmeldung: **27.10.2021**
(21) Anmeldenummer: 20170939.1
(22) Anmeldetag: 22.04.2020
(51) Int. Cl.: B65G 17/18, B65G 47/96

(54) **NEIGUNGSAUSGLEICHSVORRICHTUNG FÜR EINEN WAGEN EINER FÖRDERVORRICHTUNG**

(71) Anmelder: BEUMER Group GmbH & Co. KG, 59269 Beckum (DE)
(72) Erfinder: Müller, Christian, 58300 Wetter (Ruhr) (DE); Dirkmann, Markus, 59302 Oelde (DE)
(74) Vertreter: Angerhausen, Christoph

(57) **Zusammenfassung**

Neigungsausgleichsvorrichtung (1) für einen Wagen (2 ) einer Fördervorrichtung (3 ) zum waagerechten Transportieren von Fördergut, mit einem Halterahmen (4 ) und einem darin über eine senkrecht zur Fahrtrichtung (30 ) angeordnete Schwenkachse (6) gehaltenen Neigungsausgleichselement (5 ).

## Beschreibung

Die Erfindung betrifft eine Neigungsausgleichsvorrichtung für einen Wagen einer Fördervorrichtung zum waagerechten Transportieren von Fördergut, mit einem Halterahmen und einem darin über eine senkrecht zur Fahrtrichtung angeordnete Schwenkachse gehaltenen Neigungsausgleichselement.

Die WO 2016/206967 A1 beschreibt eine Fördervorrichtung zum Erzeugen eines Neigungsausgleichs, welche zum Erzeugen eines Niveauausgleichs eine neben der Förderstrecke zusätzliche und vom Förderwagen unabhängige Niveauausgleichsschiene aufweist, deren Abstand zur Förderstrecke für einen jeweiligen steigungsabhängigen Niveauausgleich variiert ist.

Die aus dem Stand der Technik bekannte Neigungsausgleichsvorrichtung weist den Nachteil auf, dass das Bereitstellen einer Niveauausgleichsschiene eine aufwendige Konstruktion erfordert und dadurch einerseits das Handling des transportierten Förderguts erschwert und andererseits viel Raum in Anspruch nimmt.

Es ist daher die Aufgabe der Erfindung, eine Neigungsausgleichsvorrichtung für einen Förderwagen derart weiterzuentwickeln, dass diese einen geringeren Konstruktionsaufwand benötigt und mit einer Vielzahl von Förderstrecken kompatibel ist.

Diese Aufgabe wird durch eine Neigungsausgleichsvorrichtung mit den Merkmalen des Anspruchs 1 gelöst. Die abhängigen Ansprüche betreffen jeweils vorteilhafte Ausführungsformen der Erfindung.

Demgemäß ist eine Neigungsausgleichsvorrichtung für einen Wagen einer Fördervorrichtung zum waagerechten Transportieren von Fördergut vorgesehen, mit einem Halterahmen und einem darin über eine senkrecht zur Fahrtrichtung angeordnete Schwenkachse gehaltenen Neigungsausgleichselement.

Es kann vorgesehen sein, dass die Neigungsausgleichsvorrichtung einen Schwenkantrieb zum Verschwenken des Neigungsausgleichselements gegenüber dem Halterahmen um die Schwenkachse aufweist, wobei der Schwenkantrieb bei Erhalt eines Neigungsänderungsbefehls so angesteuert ist, dass das Neigungsausgleichselement kontinuierlich in der Waagerechten gehalten ist.

Es kann ferner vorgesehen sein, dass die Neigungsausgleichsvorrichtung eine die Neigungsausgleichsvorrichtung betreffende Neigungsänderungsbenachrichtigungen erhaltende Schwenkantriebssteuerung aufweist, wobei der Schwenkantrieb bei Erhalt eines einer Neigungsänderungsbenachrichtigung entsprechenden Neigungsänderungsbefehls seitens der Schwenkantriebssteuerung so angesteuert ist, dass das Neigungsausgleichselement kontinuierlich in der Waagerechten gehalten ist.

Mit dem beanspruchten Ausgleichselement wird es ermöglicht, dass beispielsweise ein Sorter beim Transport von Produkten sowohl Steig- aus auch Gefällestrecken fahren kann und dabei das zu transportierende Produkt waagerecht hält. Durch die Lagerung des Neigungsausgleichselements im Halterahmen in einem gemeinsamen Drehpunkt wird eine Rotation des Neigungsausgleichselements gegenüber dem Halterahmen ermöglicht. Da der Halterahmen starr mit einem Förderwagen verbunden ist, erfährt der Halterahmen bei Steigungen und Gefällen der Förderstrecke jeweils entsprechende Neigungsbewegungen. Durch das demgegenüber drehbare Neigungsausgleichselement kann somit ein Ausgleich der Neigung durch entsprechendes Gegensteuern des Schwenkantriebs erfolgen.

Dabei kann über den Schwenkantrieb ein an einem unteren Ende eines sich nach unten von dem Neigungsausgleichselement erstreckenden Schwenkhebels befestigtes Antriebselement angetrieben sein, das eine parallel oder senkrecht zur Schwenkachse angeordnete Antriebsachse aufweisen kann, wobei das Antriebselement auf zumindest einer, insbesondere äquidistant zur Schwenkachse verlaufenden Antriebsbahn kraft- oder formschlüssig abrollen kann, welche am Halterahmen montiert oder ausgebildet sein kann. Der Schwenkhebel kann dabei insbesondere integral mit dem Neigungsausgleichselement ausgebildet sein. Das Neigungsausgleichselement kann eine oberhalb der Schwenkachse liegende Oberfläche aufweisen. Ferner kann sich das Neigungsausgleichselement zumindest von der Schwenkachse bis zur Antriebsachse erstrecken. Der Schwenkhebel entspricht somit insbesondere dem Abschnitt des Neigungsausgleichselements, der dem Abstand zwischen der Schwenkachse und der Antriebsachse entspricht.

Insbesondere kann der Halterahmen zwei Haltearme aufweisen, zwischen welchen das Neigungsausgleichselement gehalten ist, wobei der Schwenkhebel zwischen den Haltearmen angeordnet sein kann und die Antriebsbahn an zumindest einem der Haltearme montiert oder ausgebildet sein kann. Insbesondere kann der Schwenkhebel mittig zwischen den Haltearmen angeordnet sein.

Beispielsweise können zwei, insbesondere gegenüberliegende, durch die Antriebsachse angetriebene Antriebselemente vorgesehen sein, welche auf zwei gegenüberliegenden, insbesondere jeweils äquidistant zur Schwenkachse verlaufenden Antriebsbahnen kraft- oder formschlüssig abrollen, welche an den zwei gegenüberliegenden Haltearmen montiert oder ausgebildet sein können.

Dabei kann das Antriebselement ein auf der Antriebsachse montiertes Zahnritzel sein und die Antriebsbahn eine äquidistant zur Schwenkachse verlaufende, gebogene Zahnstange aufweisen, in welche das Zahnritzel eingreift. Im Sinne einer kinematischen Umkehr kann gleichermaßen eine Zahnstange am Neigungsausgleichselement angeordnet, sein, welche durch ein am Halterahmen befestigtes Antriebsmittel, insbesondere ein Zahnrad/-ritzel, angetrieben werden kann.

Ferner kann die Antriebsbahn eine an die Zahnstange angrenzende Führungsnut aufweisen, in welcher ein an die Zähne des Zahnritzels angrenzender glatter Wellenabschnitt geführt ist. Die Führungsnut erfüllt insbesondere den Zweck, ein Herausspringen des Zahnritzels aus der Zahnstange zu unterbinden, welches bei dynamischen Fahrsituationen, hervorgerufen durch Lastwechsel bei Kurven oder Steigungen beziehungsweise Gefälleabschnitten sowie durch den Transport großer Lasten auftreten könnte. Die Führungsnut begrenzt außerdem den Verfahrweg des Zahnritzels in seitlicher Richtung, so dass ein Überfahren der Zahnstange ebenfalls vermieden wird, während ohne eine solche Begrenzung das Ritzel gegebenenfalls nicht mehr in Eingriff mit der Zahnstange kommen könnte.

Der Schwenkantrieb kann insbesondere einen Elektromotor und ein Getriebe aufweisen, welche am Neigungsausgleichselement befestigt sind und über welche die Antriebsachse angetrieben ist. Das Getriebe kann insbesondere selbsthemmend ausgebildet sein. Ferner kann das Getriebe ein, insbesondere selbsthemmendes, Schneckengetriebe sein. Dadurch kann über den Motor und das Getriebe das oder die Antriebsmittel, insbesondere das oder die Zahnritzel, angetrieben werden, welche auf der oder den entsprechenden Antriebsbahn/en, insbesondere auf der Zahnstange, laufen und damit das Schwenken des Neigungsausgleichselements ermöglichen.

Dabei kann der Schwenkantrieb m oder im Neigungsausgleichselement montiert sein. Insbesondere können der Elektromotor sowie das Getriebe im Inneren des Neigungsausgleichselements angeordnet sein. Die Neigungserkennungseinheit kann insbesondere unmittelbar neben der Schwenkachse am Neigungsausgleichselement befestigt sein. Besonders bevorzugt ist die Neigungserkennungseinheit direkt unterhalb der Schwenkachse angeordnet.

Es kann vorgesehen sein, dass die Schwenkantriebssteuerung die Neigungsänderungsbenachrichtigungen von einem Neigungssensor erhält, welcher an der Neigungsausgleichsvorrichtung oder an einem die Neigungsausgleichsvorrichtung aufweisenden Förderwagen befestigt ist. Alternativ kann die Schwenkantriebssteuerung eine Speichereinheit aufweisen, in welcher spezifische die Förderstrecke betreffende Neigungsänderungsinformationen gespeichert sind. Weiterhin alternativ kann die Schwenkantriebssteuerung einer Steuereinheit der Fördervorrichtung untergeordnet sein, von welcher die Schwenkantriebssteuerung kontinuierlich Neigungsänderungsbenachrichtigungen erhält.

Die Schwenkantriebssteuerung kann bei Erhalt einer Neigungsänderungsinformation durch die Neigungserkennungseinheit einen entsprechenden entgegengesetzten Neigungsänderungsbefehl an den Schwenkantrieb ausgeben, durch welchen das zumindest eine Antriebselement um eine der Neigungsänderungsinformation entsprechende Strecke auf der zumindest einen Antriebsbahn verfahren ist. Enthält die Neigungsänderungsinformation den Hinweis, dass der Wagen einen Anstieg befahren hat, und sich der Halterahmen dadurch gegen den Uhrzeigersinn gegenüber der Waagerechten dreht, bewirkt der Neigungsänderungsbefehl ein Verfahren des Schwenkantriebs dermaßen, dass sich das Neigungsausgleichselement um denselben, jedoch entgegengesetzten, Winkel, also im Uhrzeigersinn, dreht, so dass das Neigungsausgleichselement stets in einer waagerechten Position verbleibt.

Ferner können die Haltearme zwei zueinander fluchtende Buchsen aufweisen, in welchen die am Neigungsausgleichselement angeordnete Schwenkachse drehbar gelagert ist. In den Buchsen können beispielsweise Gleitlager aufgenommen sein. Das Neigungsausgleichselement kann zur Realisierung der Schwenkachse zwei Achszapfen aufweisen, welche in die in den Buchsen aufgenommenen Gleitlager eingreifen können. Alternativ kann die Lagerung umgekehrt erfolgen, so dass das Neigungsausgleichselement Buchsen aufweist und die Haltearme entsprechende Achszapfen.

Dabei können die Haltearme so über Verbindungsabschnitte aneinander gekoppelt sein, dass das Neigungsausgleichselement zwischen den Haltearmen frei verschwenkbar ist. Die Verbindungsabschnitte können integral mit den Haltearmen ausgebildet sein. Die Verbindungsabschnitte können insbesondere in einem Fußbereich des Halterahmens die beiden gegenüberliegenden Haltearme miteinander verbinden. Dabei können die Haltearme mitsamt der in den Haltearmen angeordneten Position für die Schwenkachse den oder die Verbindungsabschnitte so überragen, dass das Neigungsausgleichselement frei verschwenkt werden kann, ohne in Eingriff mit dem Halterahmen, insbesondere den Verbindungsabschnitten zu gelangen. Insbesondere können die Haltearme jeweils als Gussteile ausgebildet sein, an welchen jeweils ein Teilverbindungsabschnitt angeformt ist. Zum Verbinden der gegenüberliegenden Rahmenhälften können dann die Verbindungsabschnitte miteinander verschweißt werden.

Der Halterahmen kann eine Mehrzahl Standfüße aufweisen, über welche die Neigungsausgleichsvorrichtung auf einem Förderwagen befestigbar ist. Vorzugsweise sind unterhalb jedes Haltearms zwei Standfüße angeordnet. Die Standfüße können integral mit dem jeweiligen Haltearm ausgebildet sein. Die Standfüße können auch integral mit dem dem jeweiligen Haltearm zugeordneten Verbindungsabschnitt ausgebildet sein.

Das Neigungsausgleichselement kann an seiner Oberseite eine zumindest abschnittsweise ebene Oberfläche aufweisen. Im normalen Fahrbetrieb der Fördervorrichtung kann dieser Oberfläche waagerecht ausgerichtet sein.

Außerdem kann das Neigungsausgleichselement an seiner Oberseite Auskragungen zum Befestigen von Anschlusselementen aufweisen. Es können insbesondere zwei Auskragungen vorgesehen sein, wobei eine in Fahrtrichtung nach vorn und die andere nach hinten weist. Die Auskragungen können jeweils an der oberen Kante des Neigungsausgleichselements angeordnet sein und Teil der zumindest abschnittsweise ebenen Oberfläche sein.

Der Schwenkhebel kann insbesondere integral mit dem Neigungsausgleichselement ausgebildet sein. Dabei kann das Neigungsausgleichselement, das im oberen Bereich die ebene Plattform ausbildet, sich nach unten hin verjüngen. Im Innenraum des Neigungsausgleichselements können der Elektromotor und das Getriebe als Elemente des Schwenkantriebs aufgenommen und miteinander verbunden sein. Der Schwenkantrieb kann dabei insbesondere zumindest an der Schwenkachse befestigt und an der Antriebsachse befestigt sein.

Beispielhafte Ausführungsformen der Erfindung werden anhand der nachfolgenden Figuren erläutert. Dabei zeigt:
- Fig.1: eine Seitenansicht einer Ausführungsform der Neigungsausgleichsvorrichtung;
- Fig. 2: eine Frontalansicht der Ausführungsform der Neigungsausgleichsvorrichtung gemäß Figur 1;
- Fig. 3: eine perspektivische Ansicht der Ausführungsform der Neigungsausgleichsvorrichtung gemäß Figur 1;
- Fig. 4: eine Seitenansicht einer die erfindungsgemäße Neigungsausgleichsvorrichtung aufweisenden Fördervorrichtung.

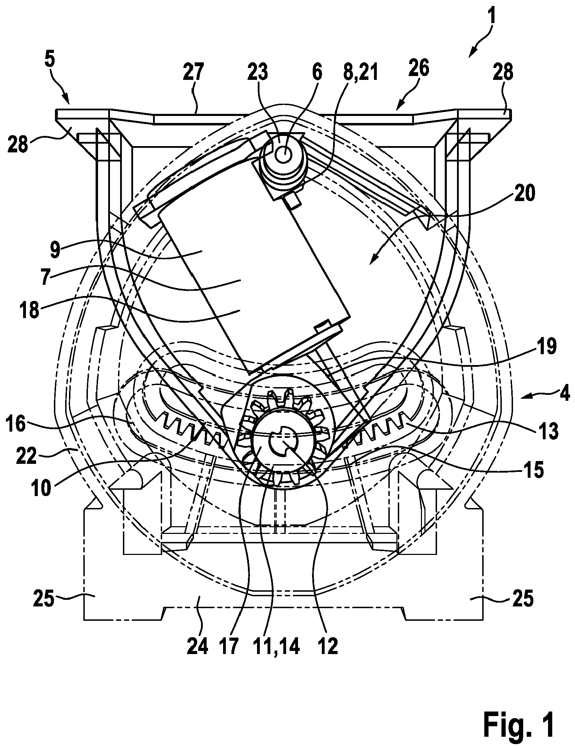

Die in Figur 1 dargestellte Neigungsausgleichsvorrichtung 1 weist einen Halterahmen 4 sowie ein Neigungsausgleichselement 5 auf, welches über eine Schwenkachse 6 verschwenkbar im Halterahmen 4 gelagert und gehalten ist. Das Neigungsausgleichselement 5 weist dazu Achszapfen auf, welche in entsprechende im Halterahmen 4 ausgebildete Buchsen 23 eingreifen, in welchen beispielsweise Gleitlager aufgenommen sind. Zum Verschwenken des Neigungsausgleichselements 5 ist im Innenraum 20 des Neigungsausgleichselements 5 ein Schwenkantrieb 7 aufgenommen, welcher zum einen an der Schwenkachse 6 befestigt und zum anderen an der darunter angeordneten Antriebsachse 12 befestigt ist. Die über den Schwenkantrieb 7 angetriebene Antriebsachse 12 weist an ihren Enden jeweils ein Zahnritzel 14 auf, die durch die Antriebsachse 12 angetrieben werden und jeweils auf Zahnstange 15 abrollen. Die Zahnstangen 15 weisen eine gebogene Form auf, welche bewirkt, dass die Zahnstangen äquidistant zur Schwenkachse 6 verlaufen. Die Zahnstangen 15 sind fluchtend gegenüberliegend aufeinander zuweisend in beiden Haltearmen 22 ausgebildet. Zu den Außenseiten der Haltearme 22 weisend sind jeweils an die Zahnstange 15 angrenzend Führungsnuten 16 ausgebildet, in welchen jeweils ein an die Zahnritzel zwölf angrenzender glatter Wellenabschnitt 17 geführt ist. Dabei sind die Führungsnuten 16 jeweils als Durchbrüche durch die Haltearme 22 ausgebildet. Durch Antreiben der Antriebsachse 12 kann die Winkellage des Neigungsausgleichselements 5 gegenüber dem Halterahmen 4 variiert werden, in dem das Zahnritzel 14 nach links oder nach rechts auf der Zahnstange 15 Verfahren wird. Dieser Effekt erlaubt es der Vorrichtung, Steigungen oder Gefällestrecken zu befahren und dabei das Neigungsausgleichselement 5 in einer waagerechten Position zu halten. Im dargestellten Ausführungsbeispiel weist das Neigungsausgleichselement 5 eine ebene Oberfläche 27 auf, welche im normalen Fahrbetrieb in einer waagerechten Position gehalten wird. An der Oberseite 26 des Neigungsausgleichselements 5 sind in der Verlängerung der ebenen Oberfläche 27 front- und rückseitig in Fahrtrichtung Auskragungen 28 ausgebildet. Diese dienen insbesondere zum Montieren von Anschlusselementen wie Transportvorrichtungen. Der Halterahmen 4 kann dabei über die vier dargestellten Standfüße 25 auf einem Förderwagen starr montiert werden, so dass sämtliche Winkeländerungen der befahrenen Strecke eins zu eins an den Halterahmen 4 übertragen werden. Zum Erkennen der jeweiligen Neigungsänderung weist das Neigungsausgleichselement 5 eine Neigungserkennungseinheit 21, insbesondere einen Neigungssensor 21 auf, welche unmittelbar unter der Schwenkachse 6 am Neigungsausgleichselement 5 befestigt ist. Bei einer Detektion einer Neigungsänderung sendet der Neigungssensor 21 eine entsprechende Information an eine Schwenkantriebssteuerung 9, welche einen entgegengesetzten Neigungsänderungsbefehl an den Elektromotor 18 weitergibt, welcher diesen Befehl durch Antreiben des Getriebes 19 und damit des Zahnritzels 14 auf der Zahnstange 15 so ausführt, dass das Neigungsausgleichselement 5 konstant in einer waagerechten Position gehalten ist. Der Abstand zwischen Schwenkachse 6 und Antriebsachse 12 kann als Schwenkhebel 10 definiert werden, wobei der Schwenkantrieb 7 zwischen beiden Achsen 6, 12 beziehungsweise im Innenraum 20 des Neigungsausgleichselement 5 fixiert ist.

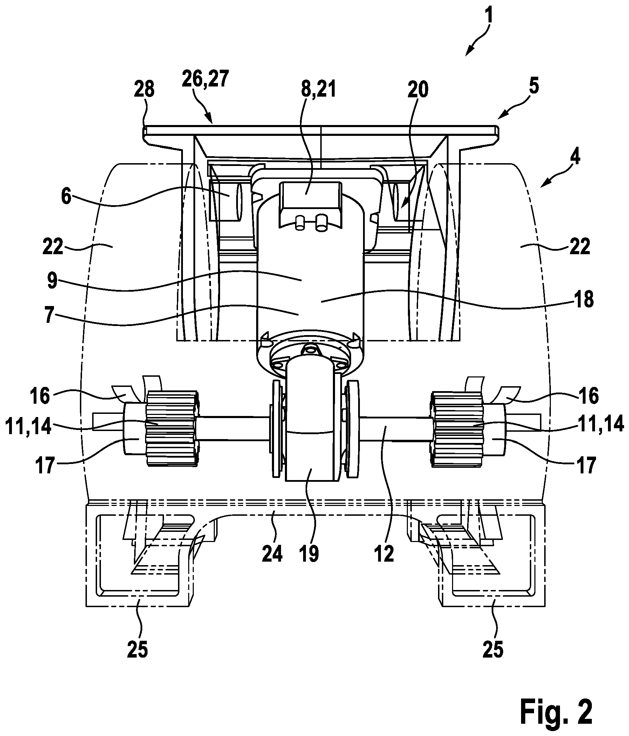

Die in Figur 2 dargestellte Frontansicht der Neigungsausgleichsvorrichtung 1 zeigt insbesondere den Schwenkantrieb 7, welcher sich zwischen der Schwenkachse 6 und der Antriebsachse 12 erstreckt. Es ist zu erkennen, dass der Schwenkantrieb 7 senkrecht zur Antriebsachse 12 ausgerichtet ist. Zum Umleiten der Antriebskraft an das Getriebe 19, das dabei insbesondere als Schneckengetriebe ausgeführt sein kann, erfolgt eine senkrechte Umleitung des Antriebsmoments von der Antriebswelle auf die Abtriebswelle, hier die Antriebsachse 12. Ferner ist das Schneckengetriebe vorzugsweise selbsthemmend ausgeführt, sodass eine Bewegung des Neigungsausgleichselements 5 um die Schwenkachse 6 nicht durch die Gewichtskraft des transportierten Förderguts bewirkt werden kann, sondern nur durch Antreiben des Elektromotors 18. Es ist zu erkennen, dass sich die Antriebsachse 12 von beiden Seiten des Getriebes 19 in Richtung beider Haltearme 22 wegerstreckt. Dort greifen jeweils die mittels der als Zahnritzel 14 ausgebildeten Antriebsmittel 11 in die in den Haltearmen 22 als Zahnstangen 15 ausgebildeten Antriebsbahnen 13 ein. Die einstückig mit den Zahnritzeln 14 ausgebildeten glatten Wellenabschnitte 17 sind jeweils zur Außenseite der Zahnritzel 14 hin in entsprechenden Führungsnuten 16 geführt, um den Bewegungsspielraum der Zahnritzel 14 insbesondere in Fahrtrichtung und senkrecht zur Fahrtrichtung einzugrenzen. Es ist ferner zu erkennen, dass der Halterahmen 4 zwei seitliche Haltearme 22 aufweist, zwischen welchen das Neigungsausgleichselement 5 verschwenkbar aufgenommen ist, und dass die Haltearme 22 über Verbindungsabschnitte 24 im Fußbereich des Halterahmens 4 miteinander verbunden, beispielsweise miteinander verschweißt, sind. Die vier in den Eckbereichen unter dem Halterahmen 4 angeordneten Standfüße 25 weisen jeweils zumindest ein Rücksprung auf, über welche der Halterahmen auf einem Förderwagen fixiert werden kann.

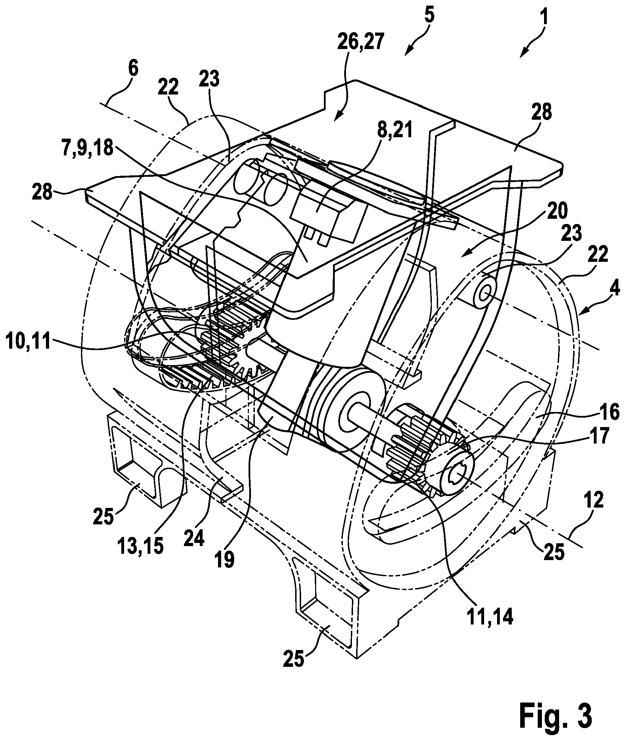

An der perspektivischen Ansicht des Neigungsausgleichsvorrichtung 1 in Figur 3 lässt sich gut erkennen, wie der Verschwenkmechanismus der Vorrichtung realisiert ist. Im Halterahmen 4, der außenseitig die zwei Haltearme 22 aufweist, zwischen denen das Neigungsausgleichselement 5 drehbar gehalten ist und welche über gegenüberliegende Verbindungsabschnitte 24 miteinander verbunden sind, ist das Neigungsausgleichselement 5 frei verschwenkbar, so dass das Neigungselement 5 auch bei Befahren der gesamten Zahnstangenstrecke nicht mit dem Halterahmen 4 kollidiert. Dazu sind die Haltearme 22 nur in einem unteren Bereich des Halterahmens über die Verbindungsabschnitte 24 miteinander verbunden, sodass wie in Figur 3 sichtbar ein Abstand zwischen der Oberkante des Verbindungsabschnitts 24 und der Außenseite des Neigungsausgleichselements 5 freigehalten wird. Zusätzlich weist das Neigungsausgleichselement 5 eine trogförmige Kontur auf, welche oben im Bereich der Oberseite eine zum Aufnehmen von Fördergut oder Anschlusselementen breite Oberfläche 27 aufweist, darunter einen Innenraum 20 für den Schwenkantrieb 7 bereitstellt und sich nach unten hin verjüngt, sodass auch bei starken Steigungen oder Gefällen, in denen sich die Antriebsachse 12 bzw. die Zahnritzel 14 durch entsprechende Detektion durch die Neigungserkennungseinheit 8 und entsprechendes Ansteuern durch den Schwenkantrieb 7 in einer maximalen Randposition auf den Zahnstangen 15 befinden, das Neigungsausgleichselement 5 nicht in Kontakt mit dem Verbindungsabschnitt 24 tritt.

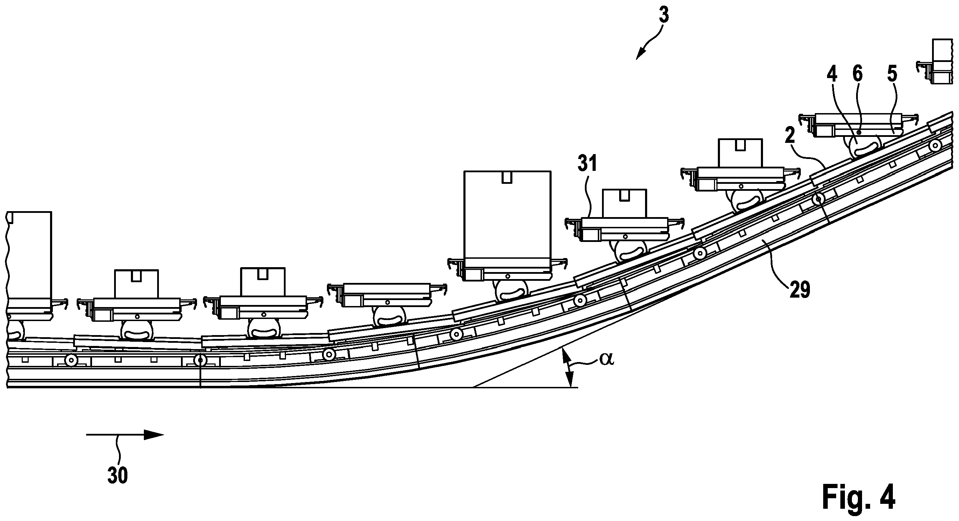

Figur 4 zeigt eine Seitenansicht einer Fördervorrichtung 3, auf der in regelmäßigen Abständen Förderwagen 2 geführt sind, wobei die Förderwagen 2 jeweils eine erfindungsgemäße Neigungsausgleichsvorrichtung 1 aufweisen und wobei auf einigen der dargestellten Wagen Transportgüter befördert werden. Die Förderstrecke 29 geht dabei in Fahrtrichtung 30 von einem waagerechten Streckenabschnitt links in einen eine Steigung aufweisenden Streckenabschnitt rechts über, wobei zu erkennen ist, dass die an die Neigungsausgleichselemente 5 gekoppelten Transportvorrichtungen 31 auf jeder Position der Förderstrecke 29 eine waagerechte Ausrichtung aufweisen. In Abhängigkeit des Steigungswinkels α der Förderstrecke 29 weisen dabei die Neigungsausgleichselemente 5 gegenüber den Halterahmen 4 jeweils einen dem Steigungswinkel α entsprechenden Winkel auf, mit welchem die Neigungsausgleichselement 5 gegenüber dem Halterahmen 4 um die Drehachse 6 verschwenkt sind. Dementsprechend neigen sich die Neigungsausgleichselemente 5 bei Steigungen dem Hang mit entsprechendem Winkel durch Absenken der Vorderseite beziehungsweise Anheben der Rückseite des Neigungsausgleichelements 5 aus ihrer Ausgangslage entgegen. Entsprechend neigen sich die Neigungsausgleichselemente 5 bei Gefällen dem Hang mit entsprechendem Winkel durch Absenken der Rückseite beziehungsweise Anheben der Vorderseite des Neigungsausgleichelements 5 aus ihrer Ausgangslage entgegen. Gleichzeitig verfährt die Antriebsachse 12 bei Befahren einer Steigung entgegen der Fahrtrichtung 30 und bei Befahren eines Gefälles in Fahrtrichtung 30.

Die in der vorstehenden Beschreibung, in den Figuren sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Neigungsausgleichsvorrichtung
- 2: Förderwagen
- 3: Fördervorrichtung
- 4: Halterahmen
- 5: Neigungsausgleichselement
- 6: Schwenkachse
- 7: Schwenkantrieb
- 8: Neigungserkennungseinheit
- 9: Schwenkantriebssteuerung
- 10: Schwenkhebel
- 11: Antriebselement
- 12: Antriebsachse
- 13: Antriebsbahn
- 14: Zahnritzel
- 15: Zahnstange
- 16: Führungsnut
- 17: glatter Wellenabschnitt
- 18: Elektromotor
- 19: Getriebe
- 20: Innenraum
- 21: Neigungssensor
- 22: Haltearme
- 23: Buchsen
- 24: Verbindungsabschnitte
- 25: Standfüße
- 26: Oberseite
- 27: Oberfläche
- 28: Auskragungen
- 29: Förderstrecke
- 30: Fahrtrichtung
- 31: Transportvorrichtung
- α: Steigungswinkel

## Patentansprüche

1. Neigungsausgleichsvorrichtung (1) für einen Wagen (2) einer Fördervorrichtung (3) zum waagerechten Transportieren von Fördergut, mit einem Halterahmen (4) und einem darin über eine senkrecht zur Fahrtrichtung (30) angeordnete Schwenkachse (6) gehaltenen Neigungsausgleichselement (5).

2. , Neigungsausgleichsvorrichtung (1) nach Anspruch 1, welches einen Schwenkantrieb (7) zum Verschwenken des Neigungsausgleichselements (5) gegenüber dem Halterahmen (4) um die Schwenkachse (6) aufweist, wobei der Schwenkantrieb (7) bei Erhalt eines Neigungsänderungsbefehls so angesteuert ist, dass das Neigungsausgleichselement (5) kontinuierlich in der Waagerechten gehalten ist.

3. Neigungsausgleichsvorrichtung (1) nach Anspruch 1 oder 2, welche eine die Neigungsausgleichsvorrichtung (1) betreffende Neigungsänderungsbenachrichtigungen erhaltende Schwenkantriebssteuerung (9) aufweist, wobei der Schwenkantrieb (7) bei Erhalt eines einer Neigungsänderungsbenachrichtigung entsprechenden Neigungsänderungsbefehls seitens der Schwenkantriebssteuerung (9) so angesteuert ist, dass das Neigungsausgleichselement (5) kontinuierlich in der Waagerechten gehalten ist.

4. Neigungsausgleichsvorrichtung (1) nach einem der Ansprüche 2 oder 3, wobei über den Schwenkantrieb (7) ein an einem unteren Ende eines sich nach unten von dem Neigungsausgleichselement (5) erstreckenden Schwenkhebels (10) befestigtes Antriebselement (11) angetrieben ist, das eine parallel oder senkrecht zur Schwenkachse (6) angeordnete Antriebsachse (12) aufweist, wobei das Antriebselement (11) auf zumindest einer, insbesondere äquidistant zur Schwenkachse (6) verlaufenden, Antriebsbahn (13) kraft- oder formschlüssig abrollt, welche am Halterahmen (4) montiert oder ausgebildet ist.

5. Neigungsausgleichsvorrichtung (1) nach Anspruch 4, wobei der Halterahmen (4) zwei Haltearme (22) aufweist, zwischen welchen das Neigungsausgleichselement (5) gehalten ist, wobei der Schwenkhebel (10) zwischen den Haltearmen (22) angeordnet ist und die Antriebsbahn (13) an zumindest einem der Haltearme (22) montiert oder ausgebildet ist.

6. Neigungsausgleichsvorrichtung (1) nach Anspruch 5, wobei zwei durch die Antriebsachse (12) angetriebene Antriebselemente (11) vorgesehen sind, welche auf zwei gegenüberliegenden, insbesondere jeweils äquidistant zur Schwenkachse (6) verlaufenden, Antriebsbahnen (13) kraft- oder formschlüssig abrollen, welche an den zwei gegenüberliegenden Haltearmen (22) montiert oder ausgebildet sind.

7. Neigungsausgleichsvorrichtung (1) nach einem der Ansprüche 4 bis 6, wobei das Antriebselement (11) ein auf der Antriebsachse (12) montiertes Zahnritzel (14) ist und die Antriebsbahn (13) eine äquidistant zur Schwenkachse (6) verlaufende, gebogene Zahnstange (15) aufweist, in welche das Zahnritzel (14) eingreift.

8. Neigungsausgleichsvorrichtung (1) nach Anspruch 7, wobei die Antriebsbahn (13) eine an die Zahnstange (15) angrenzende Führungsnut (16) aufweist, in welcher ein an die Zähne des Zahnritzels (14) angrenzender glatter Wellenabschnitt (17) geführt ist.

9. Neigungsausgleichsvorrichtung (1) nach einem der Ansprüche 4 bis 8, wobei der Schwenkantrieb (7) einen Elektromotor (18) und ein Getriebe (19) aufweist, welche am Neigungsausgleichselement (5) befestigt sind und über welche die Antriebsachse (12) angetrieben ist.

10. Neigungsausgleichsvorrichtung (1) nach einem der vorangehenden Ansprüche, wobei der Schwenkantrieb (7) am oder im Neigungsausgleichselement (5) montiert ist.

11. Neigungsausgleichsvorrichtung (1) nach einem der vorangehenden Ansprüche, wobei die Schwenkantriebssteuerung (9) die Neigungsänderungsbenachrichtigungen von einem Neigungssensor (21) erhält, welcher an der Neigungsausgleichsvorrichtung (1) oder an einem die Neigungsausgleichsvorrichtung (1) aufweisenden Förderwagen (2) befestigt ist.

12. Neigungsausgleichsvorrichtung (1) nach einem der vorangehenden Ansprüche, wobei die Schwenkantriebssteuerung (9) bei Erhalt einer Neigungsänderungsbenachrichtigung durch den Neigungssensor (21) einen entsprechenden entgegengesetzten Neigungsänderungsbefehl an den Schwenkantrieb (7) ausgibt, durch welchen das zumindest eine Antriebselement (11) um eine zur Neigungsänderungsbenachrichtigung korrespondierende Strecke auf der zumindest einen Antriebsbahn (13) verfahren ist.

13. Neigungsausgleichsvorrichtung (1) nach einem der Ansprüche 5 bis 12, wobei die Haltearme (22) zwei zueinander fluchtende Buchsen (23) aufweisen, in welchen die am Neigungsausgleichselement (5) angeordnete Schwenkachse (6) drehbar gelagert ist.

14. Neigungsausgleichsvorrichtung (1) nach einem der Ansprüche 5 bis 13, wobei die Haltearme (22) so über Verbindungsabschnitte (24) aneinander gekoppelt sind, dass das Neigungsausgleichselement (5) zwischen den Haltearmen (22) frei verschwenkbar ist.

15. Neigungsausgleichsvorrichtung (1) nach einem der vorangehenden Ansprüche, wobei der Halterahmen (4) eine Mehrzahl Standfüße (25) aufweist, über welche die Neigungsausgleichsvorrichtung (1) auf einem Förderwagen (2) befestigbar ist.
